## Europäisches Patentamt

## European Patent Office

## Office européen des brevets

(19)

(11) **EP 0 284 181 B2**

(12) **NEW EUROPEAN PATENT SPECIFICATION**

(45) Date of publication and mention
of the opposition decision:
**06.03.2002 Bulletin 2002/10**

(51) Int Cl.⁷: **B01D 53/86**, B01J 29/40

(45) Mention of the grant of the patent:
**17.03.1993 Bulletin 1993/11**

(21) Application number: **88300770.0**

(22) Date of filing: **29.01.1988**

(54) **Catalyst and process for abatement of NOx in exhaust gases**

Katalysator und Verfahren zum Reduzieren von Stickstoffoxiden in Abgasen

Catalyseur et procédé pour la réduction des oxydes d'azote dans des gaz d'échappement

(84) Designated Contracting States:
**AT BE CH DE ES FR GB GR IT LI NL SE**

(30) Priority: **06.02.1987 US 12097**

(43) Date of publication of application:
**28.09.1988 Bulletin 1988/39**

(73) Proprietor: **EXXONMOBIL OIL CORPORATION
New York, NY 10017 (US)**

(72) Inventors:
 • **Krishnamurthy, Sowmithri
   Cherry Hill New Jersey 08034 (US)**
 • **McWilliams, John Paul
   Woodbury New Jersey 08096 (US)**

 • **Pappal, David Andrew
   Haddonfield New Jersey 08033 (US)**
 • **Sigal, Catherine Teague
   Pennington New Jersey 08534 (US)**
 • **Kiliany, Thomas Richard Jr
   Mantua New Jersey 08051 (US)**

(74) Representative: **Kador & Partner
   Corneliusstrasse 15
   80469 München (DE)**

(56) References cited:
   EP-A- 0 217 480        DE-A- 2 912 269
   GB-A- 2 017 520        US-A- 4 104 361
   US-A- 4 157 375

EP 0 284 181 B2

## Description

Claims for the following Contracting States : BE, DE, FR, GB, IT, NL

This invention is concerned with a controllable process for the abatement of nitrogen oxides which avoids the transient discharge of excessive concentrations of both nitrogen oxides and ammonia as a result of changes in NOx feed rate to the reactor.

Although several nitrogen oxides are known which are relatively stable at ambient conditions, it is generally recognized that two of these, viz. nitric oxide (NO) and nitrogen dioxide (NO2), are the principle contributors to smog and other undesirable environmental effects when they are discharged into the atmosphere. Nitric oxide and nitrogen dioxide, under appropriate conditions, are interconvertible:

$$2NO + \frac{1}{2} O_2 = 2NO_2.$$

NOx as used herein means nitric oxide, nitrogen dioxide, and mixtures thereof.

Formation of man-made nitrogen oxides from the elements occurs in the high temperature zones of combustion processes. The internal combustion engine, and coal or air-fired furnaces, boilers and incinerators, all contribute to NOx emissions. In general, fuel-rich combustion mixtures produce exhaust gases with less NOx than do lean mixtures. Although the concentrations of NOx in the exhaust gases usually are low, the aggregate amounts discharged in industrial and/or highly populated areas is adequate to cause problems. Other industrial sources of NOx include manufacture of nitric acid, nitration of organic chemicals, and reprocessing of spent nuclear fuel rods by dissolution in nitric acid to recover uranyl nitrate followed by calcination to convert the nitrate to uranium oxide. These waste gases may contain relatively high levels of NOx, such as from 0.1% up to 2% to 3%.

The "stable" nitrogen oxides are thermo- dynamically very unstable with respect to decomposition into elemental oxygen and nitrogen, but no simple, economical method has been described for inducing this decomposition. Adding a reductant such as ammonia to the exhaust gas can convert NOx to elemental nitrogen and steam.

U.S. 3,900,554 to Lyon describes removing NOx from combustion effluents by adding 0.4 to 10 mols (preferably 0.5 to 1.5 mols) of ammonia followed by heating to 1600° C to 2000° C. The NOx is reduced to nitrogen with ammonia. The method is reported to work best if hydrocarbon is added.

U.S. 4,220,632 to Pence et al. describes reducing NOx from a fossil-fuel-fired power plant, or industrial plant employing ammonia as reductant and, as catalyst, the hydrogen or sodium form of a zeolite having pore openings of 0.3 to 1.0 nm (3 to 10 Angstroms).

A problem with existing technology is that the processes using $NH_3$ to remove NOx do not respond quickly to changes in NOx concentration. These cleanup processes can emit $NH_3$. The catalysts used retain or absorb $NH_3$, and will release $NH_3$ if the NOx content of the exhaust gas drops.

A way has now been discovered to overcome these difficulties.

Accordingly, the present invention provides a process for treating industrial exhaust gas contaminated with $NO_x$ as defined in Claim 1. Further features of the invention are defined in the dependent claims.

The figure illustrates $NO_2$ recovery after NH3 shutoff.

The term "industrial exhaust gas" means any waste gas formed in an industrial process. The composition of such a gas varies. When formed in the combustion of fossil fuels, it generally contains nitrogen, steam and carbon dioxide and up to 1000 ppm nitric oxide plus nitrogen dioxide. Sulfur-containing fuels produce an exhaust gas that contains some SO2. Rich fuel-air mixtures generally produce an exhaust gas with little free oxygen and some carbon monoxide. Lean fuel air mixtures, i.e. mixtures with excess air an exhaust gas that contains gaseous oxygen. Industrial processes such as nitration, uranium recovery, and calcining nitrate salt-containing solids produce exhaust which may be free of steam and may contain very high concentrations of nitrogen or other inert gases.

The process of this invention requires that the $NO_x$-contaminated gas be mixed above 200°C with gaseous ammonia. The elevated temperature avoids the formation of solid ammonium nitrite or nitrate, which is potentially hazardous. The amount of ammonia included in the mixture should be approximately the amount required to stoichiometrically react with the NOx present in the exhaust gases. The mixture of ammonia and exhaust gas may contain some oxygen. The invention is operable even with no oxygen present. With a deficiency, however, the stoichiometry changes, requiring somewhat less ammonia. This is illustrated by the equations below which represent the stoichiometry in the total absence of oxygen.

$$6NO_2 + 8NH_3 -- 7N_2 + 12H_2O$$

$$6NO + 4NH_3 -- 5N_2 + 6H_2O$$

As used herein, the expression "approximate stoichiometric amount of ammonia" means 0.75 to 1.25 the molar amount of ammonia requires when some oxygen is present, these amounts being adjusted to reflect the somewhat lesser demand when operating with a deficiency of oxygen.

The gas mixture contacts a zeolite catalyst. Zeolites are described in Breck, "Zeolite Molecular Sieves", John Wiley and Sons, N.Y., N.Y. (1974).

The most common crystalline zeolites are those having robust 3-dimensional aluminosilicate frameworks, and a large number of these are described by Breck (ibid). Analogous structures may be synthesized with gallium instead of aluminum as the trivalent heteroatom to form gallosilicates. Structures have been reported in which iron, boron, or other elements replace part or mostly all of the aluminum. Materials having the same crystal structure as a known zeolite, as evidenced by X-ray diffraction, but consisting essentially of silica, have been described. Some investigators interpret the term "zeolite" in a narrow sense, restricting it to compositions of silica and alumina. Such restricted definition is unduly narrow. The term "porous crystalline siliceous solid" is used herein to mean a material having a robust 3-dimensional framework having uniform pores, such as described by Breck, and having silica as the principal framework element, regardless of what other framework elements may be present. The term "zeolite" is used herein to describe structures in which silica is the principal framework constituent and in which aluminum is the predominant trivalent heteroatom.

Contacting of exhaust gas with catalyst is conducted at 200°C to 600°C, and preferably at 250°C to 550 °C, and at a gas hourly space velocity (vols. of gas at STP per volume of catalyst per hour) adjusted to provide the desired conversion. The GHSV can be from 750 to 25,000 hr$^{-1}$, and preferably from 1000 to 7500 hr$^{-1}$.

In general, since the reaction is exothermic but low concentrations of $NO_x$ are present, adequate temperature control is readily achieved with a simple stationary fixed-bed of catalyst. However, other contacting means are contemplated, such as contacting with a fixed fluid bed, a transport bed, and a monolithic catalyst structure such as a honeycomb. The process of this invention is operable at subatmospheric to superatmospheric pressure, e.g. 35 to 3500 kPa (5 to 500 psia) and preferably at 70 to 350 kPa (10 to 50 psia) i.e. near atmospheric pressure.

A preferred catalyst comprises an intermediate pore size zeolite having a silica to alumina ratio above 12 and a Constraint Index of 1 to 12. Examples include ZSM-5, ZSM-11, ZSM-12, ZSM-21, ZSM-23, ZSM-35, ZSM-38 and ZSM-48, sometimes referred to as of the ZSM-5 type. This term may be used to designate zeolites useful in this invention.

These zeolites provide constrained access to and egress from the intracrystalline free space by virtue of having an effective pore size intermediate the small pore Linde A and the large pore Linde X, i.e. the pore windows of the structure have about a size such as would be provided by 10-membered rings of oxygen atoms.

The silica to alumina ratio referred to may be determined by conventional analysis. This ratio represents the ratio in the rigid anionic framework of the zeolite crystal and excludes aluminum in the binder or in cationic or other form within the channels.

The ZSM-5 type zeolites freely sorb normal hexane and constrained access to larger molecules.

Rather than attempt to judge from crystal structure whether or not a zeolite possesses the necessary constrained access to molecules larger than normal paraffins, a simple determination of the "Constraint Index", or C.I., by conventional methods may be made

Zeolites suitable for the present invention are those having a Constraint Index of 1 to 12. C.I. values for and US patents describing some typical zeolites are:

TABLE I

| Zeolite | C. I. | US Patent |
|---|---|---|
| ZSM-4 | 0.5 | |
| ZSM-5 | 8.3 | 3,702,886 |
| ZSM-11 | 8.7 | 3,709,979 |
| ZSM-12 | 2 | 3,832,449 |
| ZSM-23 | 9.1 | 4,076,842 |
| ZSM-35 | 4.5 | 4,016,245 |
| ZSM-38 | 2 | 4,046,859 |
| TMA Offretite | 3.7 | |
| Beta | 0.6 | |
| H-Zeolon (mordenite) | 0.4 | |

TABLE I (continued)

| Zeolite | C. I. | US Patent |
|---|---|---|
| REY | 0.4 | |
| Amorphous Silica-Alumina | 0.6 | |
| Erionite | 38 | |

Constraint Index varies with severity of operation (conversion) and the presence or absence of binders. Constraint Index is an inclusive rather than an exclusive value, i.e., a zeolite having a Constraint Index of 1 to 12 is included even though the same zeolite tested under other conditions may have a Constraint Index outside of 1 to 12.

These zeolites when prepared in the presence of organic cations, are substantially catalytically inactive, possibly because the intra-crystalline free space is occupied by organic cations from the forming solution. These cations are removed by heating in an inert atmosphere at (538°C) 1000°F for one hour, for example, followed by base exchange with ammonium salts followed by calcination at (538°C) 1000°F in air.

The ZSM-5 type zeolites referred to herein have a crystal framework density, in the dry hydrogen form, of not less than about 1.6 grams per cubic centimeter.

The ZSM-5 zeolites may be incorporated in a matrix or binder. Matrix material are conventional, e.g., synthetic or naturally occuring substances, inorganic material such as clay, silica and/or metal oxides.

Matrix materials, such as alumina, silica-alumina and silica-magnesia are preferred. The matrix may be in the form of a cogel. The relative proportions of zeolite and inorganic oxide gel matrix on an anhydrous basis may vary widely with the zeolite content ranging from 5 to 99 percent by weight, usually 10 to 80 percent by weight of the dry composite.

The ZSM-5 type zeolites, in the hydrogen form and in certain divalent metal or polyvalent metaexchange forms, have acid catalytic activity. The term "acid catalytic activity" means the effectiveness of the zeolite for catalyzing reactions promoted by acid catalysts. Catalytic cracking, hydrocracking, skelatal isomerization, catalytic dewaxing, and various aromatic hydrocarbon reactions such as alkylation, dealkylation, isomerization and disproportionation, are of acid catalyzed reactions. Other reactions, such as alcohol dehydration, are also in this class.

Acid activity may be measured by "alpha value", which is the ratio of the rate constant of a test sample for cracking normal hexane to the rate constant of a standard reference catalyst. Thus, an alpha value = 1 means that the test sample and the reference standard have about the same activity. The alpha test is described in U.S. Patent 3,354,078.

In treating FCC regenerator flue gas, hydrogen form ZSM-5 is a preferred zeolite, although base exchange with a base metal such as chromium, maganese, cobalt, nickel, or copper can be advantageous.

In one configuration, fluidizable particles of the $NO_x$-reduction catalyst are injected into the flue gas duct from the regenerator and the ammonia required for the NOx-reduction is added either at the same point or upstream of the point at which catalyst is injected. At an appropriate point downstream of the ammonia injection, after reduction of the NOx, the particles are recovered by a cyclone separator or by an electrostatic precipitator, and the flue gas then is discharged. The particles are disposed of or recirculated.

In a second configuration the flue gas from the regenerator is passed from the flue gas duct of the regenerator to a moving bed or a fluid bed of the catalyst.

In a third configuration, the flue gas is mixed with ammonia and the mixture passed parallel to the catalyst surface. The catalyst is in a honeycomb or layer configuration.

Examples 1-9 of EP-A-0 217 480 demonstrate the effectiveness of ZSM-5 for $NO_x$ control. Although effective, the ZSM-5 catalysts used could not always respond quickly to changes in $NO_x$ content of flue gas.

We learned that for best control of an $NO_x$ abatement process it was essential to use catalyst which could quickly adjust to changes in $NO_x$ content.

Dynamic Responsiveness of Catalyst

We shall now describe in detail the apparatus and method used to characterize the speed of response of a catalyst to changes in the rate of feed of one of the reactants. Such changes may occur slowly, e.g., a kiln operation, or as with a large increase in loading of a stationary internal combustion engine. The speed of response to a step change in NOx input, measured as described below, is the DRI (Dynamic Response Index) of the catalyst.

Apparatus:

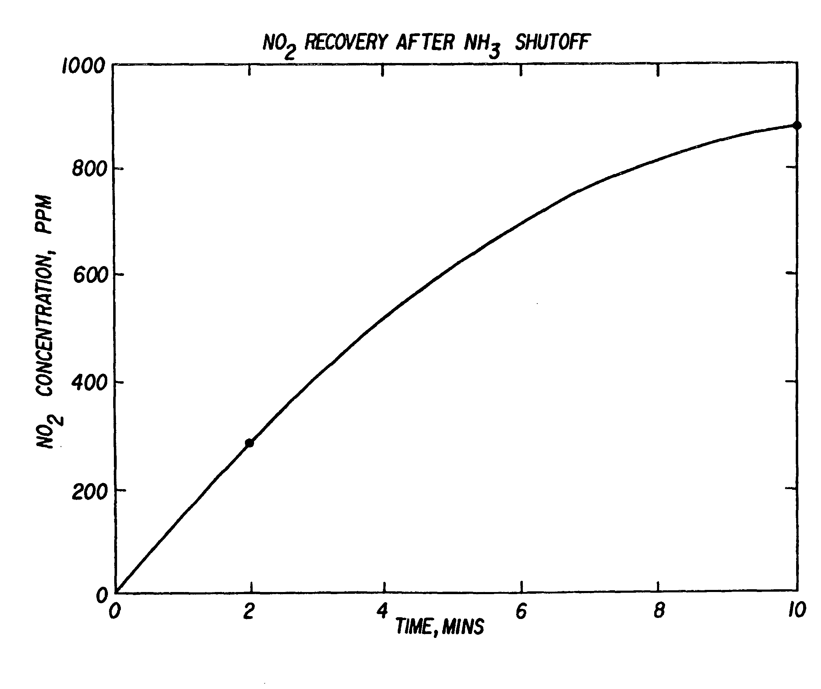

A schematic of the experimental apparatus is shown in Figure 1 of EP-A-0 217 480. The apparatus consists of a quartz tubular reactor heated by an electrical furnace. The temperature of the catalyst is measured using a thermocouple. The catalyst is crushed and sieved to 1.4 to 2.4 mm (8-14 mesh) and placed in the reactor with quartz wool and chips placed before and after the reactor as packing. $NO_2$ and NH3 are fed into the reactor separately. Air is co-fed with the NO2. On-line analysis of NO2 and NH3 were carried out using Draeger tubes.

Procedure:

All DRI measurements, unless stated to be under different conditions, were performed with 10 cc of catalyst at a GHSV of 6000 (calculated at room temperature) and at 343° C with an inlet concentration of 1000 ppm of NO2. NH3 and 02 were maintained in excess of the stoichiometric levels based on the following reaction

$$2NO_2 + 4NH_3 + O_2 = 3N_2 + 6H_2O$$

The NO2 and NH3 were 1% and 5% mixtures in N2, respectively. Nitrogen was used as a diluent in all experiments.

The catalyst bed was heated to the desired temperature, while maintaining $N_2$ flow. NO2 is introduced and its outlet concentration is allowed to increase to the measured value at the reactor inlet. Next, air and NH3 are introduced and the reactor temperature is adjusted to the desired value after a mild exotherm has passed through the catalyst bed. While the oxygen was 50% in excess of stoichiometric levels, the NH3 entering the reactor was adjusted to maintain an outlet concentration of at least 25 ppm. Once steady operating conditions have been established, the reaction is allowed to proceed for 30 minutes, during which period the NO2 and NH3 concentrations are measured frequently to ensure a steady state. At this time the percent NOx conversion is noted. Then the NH3 feed to the reactor is shut off and the NO2 concentration at the reactor outlet is measured until it returns to its initial value. The time required for the NO2 concentration at the reactor outlet to reach 63% of its final value is estimated to the nearest one tenth of a minute by mathematical interpolation from the NO2 recovery curve, and this value is taken as the time constant, tc, for the catalyst under examination. A typical NOx recovery curve is shown in the Figure, and is approximately first order. The decay of NOx conversion reflects the reaction with sorbed ammonia which follows a curve that is the mirror image of the Figure. It can be shown mathematically that the ratio of the time constant for any two samples closely approximates the ratio of the ammonia desorbed.

The use of the time constant for pseudo first order reactions is described in Process Control, Peter Harriott, pp 24-25, Mc Graw Hill Book Company.

The Dynamic Response Index for a catalyst is calculated from the time constant, tc, from the relation

$$DRI = 100 \times (tref/tc)$$

in which tref is a reference time constant, arbitrarily assigned a value of 4.0 minutes, to provide a convenient DRI scale.

Examples 1-6 which follow illustrate the large favorable effect obtained by aging the catalyst prior to contact with NOx in the abatement process of this invention. Examples 1-6 all were run with ZSM-5 having a silica to alumina ratio of 26:1. The treatments included steaming at different severities, and conversion to the sodium form, each of which results in a decrease in activity for acid catalyzed reactions with but little effect on the activity of the catalyst for reduction of NOx by ammonia. The results are summarized below:

| Example NO. | Catalyst NO. | Catalyst Treatment | DRI | alpha value | % NOx CONV. |
|---|---|---|---|---|---|
| 1 | 1 | NH$_4$+ exchanged and calcined | 6 | 1357 | 94 |
| 2 | 2 | Cat No. 1 steamed | 14 | 1006 | 70 |
| 3 | 3 | Cat No. 2 steamed | 33 | 154 | 76 |
| 4 | 4 | Cat No. 1 steamed | 49 | 58 | 83 |
| 5 | 5 | Cat No. 1 steamed | 100 | 32 | 90 |
| 6 | 6 | Cat No. 1 Na+ exchanged to equimolar ratio Na:Al2O3 | 100 | 1 | 69 |

Example 7

A sample of the fresh Ni-ZSM-5 catalyst used in Example 7 of EP-A-0 217 480 was evaluated for its DRI value. The catalyst, which had an alpha value of 100, was found to have a DRI of 24. The NOx conversion noted in the DRI test was 90%.

Example 8

A sample of the spent Ni-ZSM-5 catalyst used in Example 8 of EP-A-0 217 480 was evaluated for its DRI value. The catalyst had an alpha value of 62 and a DRI of 20. The NOx conversion noted in the DRI test was 70%.

Examples 1-8 show the dramatic increase in DRI produced by deactivation of the hydrogen form zeolite of Example 1 to reduce its activity for acid catalyzed reactions. In particular, Examples 1-6 show a variation of the DRI from a value of 6 for Example 1 to a value of 100 for Examples 5 and 6, which is a 17-fold variation from the fastest-responding catalyst to the slowest. At the same time, the six samples show a NOx conversion in the DRI test ranging from minimum to maximum values of 69% and 94%, which is about a 1.4 fold variation. There is no systematic variation of the NOx conversion level, but even if it were systematic and inversely correlated with the DRI, the DRI advantage as one progresses from Example 1 to 6 would far outweight the relatively small loss of catalytic activity which could be readily compensated, e.g. by a small reduction of space velocity. The results of Examples 7 and 8 are consistent with the above observations.

The decline in acid catalytic activity over the 1300-fold change in alpha value shows a negative correlation with the speed of response (DRI).

Very good results can be achieved with zeolites having a DRI above 25, more preferably having a DRI of 30-200, and most preferably having a DRI of 50-100 coupled with an alpha value of 1 to 60.

The above examples show that a $NO_x$ reduction process having rapid dynamic response to changes in $NO_x$ concentration is provided by a catalyst comprising a porous crystalline siliceous solid having a moderate to relatively low activity for acid catalyzed reactions, as measured by an alpha value in the range of 10 to 250, or 20 to 150, or 20 to 100. As indicated by Examples 1-8, such moderate acid activity could be achieved by steaming, by the addition of metallic cations to the zeolite, or by the use of an acidic crystalline solid which has become aged in use as an acidic organic conversion catalyst, or by combinations of such means or by synthesis means. Steam and the acquisition of metal contaminants either alone or in combination often is responsible for the deterioration in performance of a commercial organic or hydrocarbon conversion catalyst.

For purposes of the present invention, the term "aged" will be used to include a crystalline siliceous material the alpha value of which has been reduced in commercial use as an organic or hydrocarbon conversion catalyst (i.e. naturally aged), and such material that has been steamed, e.g. at 427° to 650 °C (800° to 1200°F), and such material that has added metallic cations that reduce the alpha value, and materials for which the alpha value has been reduced by a combination of such means.

The preferred method for introducing metallic cations is conventional ion-exchange. Alkali and alkaline earth metal cations are highly effective for controlling the acid activity, the alkaline earth metal cations being preferred. Particularly preferred are calcium and magnesium.

Use of virgin catalyst with alkali or alkaline earth metals is preferred over used or naturally aged catalyst. The fresh zeolite will not have the uncertainties of unknown contaminents due to use in a refinery process.

The catalyst of the present invention is unusual in that the zeolite used will have little or no activity for conventional uses in hydrocarbon conversion. It is surprising that a catalyst which has almost no cracking activity, e.g., Catalyst No. 6 with equimolar amounts of Na and $Al_2O_3$ having an alpha value of 1, is still effective at converting $NO_x$.

Description for the following Contracting States : AT, CH, ES, GR, LI, SE

This invention is concerned with a controllable process for the abatement of nitrogen oxides which avoids the transient discharge of excessive concentrations of both nitrogen oxides and ammonia as a result of changes in NOx feed rate to the reactor.

Although several nitrogen oxides are known which are relatively stable at ambient conditions, it is generally recognized that two of these, viz. nitric oxide (NO) and nitrogen dioxide (NO2), are the principle contributors to smog and other undesirable environmental effects when they are discharged into the atmosphere. Nitric oxide and nitrogen dioxide, under appropriate conditions, are interconvertible:

$$2NO + \frac{1}{2}O_2 = 2NO_2.$$

NOx as used herein means nitric oxide, nitrogen dioxide, and mixtures thereof.

Formation of man-made nitrogen oxides from the elements occurs in the high temperature zones of combustion processes. The internal combustion engine, and coal or air-fired furnaces, boilers and incinerators, all contribute to NOx emissions. In general, fuel-rich combustion mixtures produce exhaust gases with less NOx than do lean mixtures. Although the concentrations of NOx in the exhaust gases usually are low, the aggregate amounts discharged in industrial and/or highly populated areas is adequate to cause problems. Other industrial sources of NOx include manufacture of nitric acid, nitration of organic chemicals, and reprocessing of spent nuclear fuel rods by dissolution in nitric acid to recover uranyl nitrate followed by calcination to convert the nitrate to uranium oxide. These waste gases may contain relatively high levels of NOx, such as from 0.1% up to 2% to 3%.

The "stable" nitrogen oxides are thermo- dynamically very unstable with respect to decomposition into elemental oxygen and nitrogen, but no simple, economical method has been described for inducing this decomposition. Adding a reductant such as ammonia to the exhaust gas can convert NOx to elemental nitrogen and steam.

U.S. 3,900,554 to Lyon describes removing NOx from combustion effluents by adding 0.4 to 10 mols (preferably 0.5 to 1.5 mols) of ammonia followed by heating to 1600° C to 2000° C. The NOx is reduced to nitrogen with ammonia. The method is reported to work best if hydrocarbon is added.

U.S. 4,220,632 to Pence et al. describes reducing NOx from a fossil-fuel-fired power plant, or industrial plant employing ammonia as reductant and, as catalyst, the hydrogen or sodium form of a zeolite having pore openings of 0.3 to 1.0 nm (3 to 10 Angstroms).

A problem with existing technology is that the processes using $NH_3$ to remove NOx do not respond quickly to changes in NOx concentration. These cleanup processes can emit $NH_3$. The catalysts used retain or absorb $NH_3$, and will release $NH_3$ if the NOx content of the exhaust gas drops.

A way has now been discovered to overcome these difficulties.

Accordingly, the present invention provides a process for treating industrial exhaust gas contaminated with $NO_x$ as defined in Claim 1. Further features of the invention are defined in the dependent claims.

The figure illustrates $NO_2$ recovery after NH3 shutoff.

The term "industrial exhaust gas" means any waste gas formed in an industrial process. The composition of such a gas varies. When formed in the combustion of fossil fuels, it generally contains nitrogen, steam and carbon dioxide and up to 1000 ppm nitric oxide plus nitrogen dioxide. Sulfur-containing fuels produce an exhaust gas that contains some SO2. Rich fuel-air mixtures generally produce an exhaust gas with little free oxygen and some carbon monoxide. Lean fuel air mixtures, i.e. mixtures with excess air an exhaust gas that contains gaseous oxygen. Industrial processes such as nitration, uranium recovery, and calcining nitrate salt-containing solids produce exhaust which may be free of steam and may contain very high concentrations of nitrogen or other inert gases.

The process of this invention requires that the $NO_x$-contaminated gas be mixed above 200°C with gaseous ammonia. The elevated temperature avoids the formation of solid ammonium nitrite or nitrate, which is potentially hazardous. The amount of ammonia included in the mixture should be approximately the amount required to stoichiometrically react with the NOx present in the exhaust gases. The mixture of ammonia and exhaust gas may contain some oxygen. The invention is operable even with no oxygen present. With a deficiency, however, the stoichiometry changes, requiring somewhat less ammonia. This is illustrated by the equations below which represent the stoichiometry in the total absence of oxygen.

$$6NO_2 + 8NH_3 -- 7N_2 + 12H_2O$$

$$6NO + 4NH_3 -- 5N_2 + 6H_2O$$

As used herein, the expression "approximate stoichiometric amount of ammonia" means 0.75 to 1.25 the molar amount of ammonia requires when some oxygen is present, these amounts being adjusted to reflect the somewhat lesser demand when operating with a deficiency of oxygen.

The gas mixture contacts a zeolite catalyst. Zeolites are described in Breck, "Zeolite Molecular Sieves", John Wiley and Sons, N.Y., N.Y. (1974).

The most common crystalline zeolites are those having robust 3-dimensional aluminosilicate frameworks, and a large number of these are described by Breck (ibid). Analogous structures may be synthesized with gallium instead of aluminum as the trivalent heteroatom to form gallosilicates. Structures have been reported in which iron, boron, or other elements replace part or mostly all of the aluminum. Materials having the same crystal structure as a known zeolite, as evidenced by X-ray diffraction, but consisting essentially of silica, have been described. Some investigators interpret the term "zeolite" in a narrow sense, restricting it to compositions of silica and alumina. Such restricted definition is unduly narrow. The term "porous crystalline siliceous solid" is used herein to mean a material having a robust 3-dimensional framework having uniform pores, such as described by Breck, and having silica as the principal framework element, regardless of what other framework elements may be present. The term "zeolite" is used herein to describe structures in which silica is the principal framework constituent and in which aluminum is the predominant trivalent heteroatom.

Contacting of exhaust gas with catalyst is conducted at 200°C to 600°C, and preferably at 250 °C to 550°C, and at a gas hourly space velocity (vols. of gas at STP per volume of catalyst per hour) adjusted to provide the desired conversion. The GHSV can be from 750 to 25,000 hr$^{-1}$, and preferably from 1000 to 7500 hr$^{-1}$.

In general, since the reaction is exothermic but low concentrations of NO$_x$ are present, adequate temperature control is readily achieved with a simple stationary fixed-bed of catalyst. However, other contacting means are contemplated, such as contacting with a fixed fluid bed, a transport bed, and a monolithic catalyst structure such as a honeycomb. The process of this invention is operable at subatmospheric to superatmospheric pressure, e.g. 35 to 3500 kPa (5 to 500 psia) and preferably at 70 to 350 kPa (10 to 50 psia) i.e. near atmospheric pressure.

A preferred catalyst comprises an intermediate pore size zeolite having a silica to alumina ratio above 12 and a Constraint Index of 1 to 12. Examples include ZSM-5, ZSM-11, ZSM-12, ZSM-21, ZSM-23, ZSM-35, ZSM-38 and ZSM-48, sometimes referred to as of the ZSM-5 type. This term may be used to designate zeolites useful in this invention.

These zeolites provide constrained access to and egress from the intracrystalline free space by virtue of having an effective pore size intermediate the small pore Linde A and the large pore Linde X, i.e. the pore windows of the structure have about a size such as would be provided by 10-membered rings of oxygen atoms.

The silica to alumina ratio referred to may be determined by conventional analysis. This ratio represents the ratio in the rigid anionic framework of the zeolite crystal and excludes aluminum in the binder or in cationic or other form within the channels.

The ZSM-5 type zeolites freely sorb normal hexane and constrained access to larger molecules.

Rather than attempt to judge from crystal structure whether or not a zeolite possesses the necessary constrained access to molecules larger than normal paraffins, a simple determination of the "Constraint Index", or C.I., by conventional methods may be made

Zeolites suitable for the present invention are those having a Constraint Index of 1 to 12. C.I. values for and US patents describing some typical zeolites are:

TABLE I

| Zeolite | C. I. | US Patent |
|---------|-------|-----------|
| ZSM-4 | 0.5 | |
| ZSM-5 | 8.3 | 3,702,886 |
| ZSM-11 | 8.7 | 3,709,979 |
| ZSM-12 | 2 | 3,832,449 |
| ZSM-23 | 9.1 | 4,076,842 |
| ZSM-35 | 4.5 | 4,016,245 |
| ZSM-38 | 2 | 4,046,859 |
| TMA Offretite | 3.7 | |
| Beta | 0.6 | |
| H-Zeolon (mordenite) | 0.4 | |
| REY | 0.4 | |
| Amorphous Silica-Alumina | 0.6 | |
| Erionite | 38 | |

Constraint Index varies with severity of operation (conversion) and the presence or absence of binders. Constraint Index is an inclusive rather than an exclusive value, i.e., a zeolite having a Constraint Index of 1 to 12 is included even though the same zeolite tested under other conditions may have a Constraint Index outside of 1 to 12.

These zeolites when prepared in the presence of organic cations, are substantially catalytically inactive, possibly because the intra-crystalline free space is occupied by organic cations from the forming solution. These cations are removed by heating in an inert atmosphere at (538°C) 1000°F for one hour, for example, followed by base exchange with ammonium salts followed by calcination at (538°C) 1000° F in air.

The ZSM-5 type zeolites referred to herein have a crystal framework density, in the dry hydrogen form, of not less than about 1.6 grams per cubic centimeter.

The ZSM-5 zeolites may be incorporated in a matrix or binder. Matrix material are conventional, e.g., synthetic or naturally occuring substances, inorganic material such as clay, silica and/or metal oxides.

Matrix materials, such as alumina, silica-alumina and silica-magnesia are preferred. The matrix may be in the form of a cogel. The relative proportions of zeolite and inorganic oxide gel matrix on an anhydrous basis may vary widely with the zeolite content ranging from 5 to 99 percent by weight, usually 10 to 80 percent by weight of the dry composite.

The ZSM-5 type zeolites, in the hydrogen form and in certain divalent metal or polyvalent metaexchange forms, have acid catalytic activity. The term "acid catalytic activity" means the effectiveness of the zeolite for catalyzing reactions promoted by acid catalysts. Catalytic cracking, hydrocracking, skelatal isomerization, catalytic dewaxing, and various aromatic hydrocarbon reactions such as alkylation, dealkylation, isomerization and disproportionation, are of acid catalyzed reactions. Other reactions, such as alcohol dehydration, are also in this class.

Acid activity may be measured by "alpha value", which is the ratio of the rate constant of a test sample for cracking normal hexane to the rate constant of a standard reference catalyst. Thus, an alpha value = 1 means that the test sample and the reference standard have about the same activity. The alpha test is described in U.S. Patent 3,354,078.

In treating FCC regenerator flue gas, hydrogen form ZSM-5 is a preferred zeolite, although base exchange with a base metal such as chromium, maganese, cobalt, nickel, or copper can be advantageous.

In one configuration, fluidizable particles of the $NO_x$-reduction catalyst are injected into the flue gas duct from the regenerator and the ammonia required for the NOx-reduction is added either at the same point or upstream of the point at which catalyst is injected. At an appropriate point downstream of the ammonia injection, after reduction of the NOx, the particles are recovered by a cyclone separator or by an electrostatic precipitator, and the flue gas then is discharged. The particles are disposed of or recirculated.

In a second configuration the flue gas from the regenerator is passed from the flue gas duct of the regenerator to a moving bed or a fluid bed of the catalyst.

In a third configuration, the flue gas is mixed with ammonia and the mixture passed parallel to the catalyst surface. The catalyst is in a honeycomb or layer configuration.

Examples 1-9 of EP-A-0 217 480 demonstrate the effectiveness of ZSM-5 for $NO_x$ control. Although effective, the ZSM-5 catalysts used could not always respond quickly to changes in $NO_x$ content of flue gas.

We learned that for best control of an $NO_x$ abatement process it was essential to use catalyst which could quickly adjust to changes in $NO_x$ content.

Dynamic Responsiveness of Catalyst

We shall now describe in detail the apparatus and method used to characterize the speed of response of a catalyst to changes in the rate of feed of one of the reactants. Such changes may occur slowly, e.g., a kiln operation, or as with a large increase in loading of a stationary internal combustion engine. The speed of response to a step change in NOx input, measured as described below, is the DRI (Dynamic Response Index) of the catalyst.

Apparatus:

A schematic of the experimental apparatus is shown in Figure 1 of EP-A-0 217 480. The apparatus consists of a quartz tubular reactor heated by an electrical furnace. The temperature of the catalyst is measured using a thermocouple. The catalyst is crushed and sieved to 1.4 to 2.4 mm (8-14 mesh) and placed in the reactor with quartz wool and chips placed before and after the reactor as packing. $NO_2$ and NH3 are fed into the reactor separately. Air is co-fed with the NO2. On-line analysis of NO2 and NH3 were carried out using Draeger tubes.

Procedure:

All DRI measurements, unless stated to be under different conditions, were performed with 10 cc of catalyst at a GHSV of 6000 (calculated at room temperature) and at 343°C with an inlet concentration of 1000 ppm of NO2. NH3 and 02 were maintained in excess of the stoichiometric levels based on the following reaction

$$2NO_2 + 4NH_3 + O_2 = 3N_2 + 6H_2O$$

The NO2 and NH3 were 1% and 5% mixtures in N2, respectively. Nitrogen was used as a diluent in all experiments.

The catalyst bed was heated to the desired temperature, while maintaining $N_2$ flow. NO2 is introduced and its outlet concentration is allowed to increase to the measured value at the reactor inlet. Next, air and NH3 are introduced and the reactor temperature is adjusted to the desired value after a mild exotherm has passed through the catalyst bed. While the oxygen was 50% in excess of stoichiometric levels, the NH3 entering the reactor was adjusted to maintain an outlet concentration of at least 25 ppm. Once steady operating conditions have been established, the reaction is allowed to proceed for 30 minutes, during which period the NO2 and NH3 concentrations are measured frequently to ensure a steady state. At this time the percent NOx conversion is noted. Then the NH3 feed to the reactor is shut off and the NO2 concentration at the reactor outlet is measured until it returns to its initial value. The time required for the NO2 concentration at the reactor outlet to reach 63% of its final value is estimated to the nearest one tenth of a minute by mathematical interpolation from the NO2 recovery curve, and this value is taken as the time constant, tc, for the catalyst under examination. A typical NOx recovery curve is shown in the Figure, and is approximately first order. The decay of NOx conversion reflects the reaction with sorbed ammonia which follows a curve that is the mirror image of the Figure. It can be shown mathematically that the ratio of the time constant for any two samples closely approximates the ratio of the ammonia desorbed.

The use of the time constant for pseudo first order reactions is described in <u>Process Control,</u> Peter Harriott, pp 24-25, Mc Graw Hill Book Company.

The Dynamic Response Index for a catalyst is calculated from the time constant, tc, from the relation

$$DRI = 100 \times (tref/tc)$$

in which tref is a reference time constant, arbitrarily assigned a value of 4.0 minutes, to provide a convenient DRI scale.

Examples 1-6 which follow illustrate the large favorable effect obtained by aging the catalyst prior to contact with NOx in the abatement process of this invention. Examples 1-6 all were run with ZSM-5 having a silica to alumina ratio of 26:1. The treatments included steaming at different severities, and conversion to the sodium form, each of which results in a decrease in activity for acid catalyzed reactions with but little effect on the activity of the catalyst for reduction of NOx by ammonia. The results are summarized below:

| Example NO. | Catalyst NO. | Catalyst Treatment | DRI | alpha value | % NOx CONV. |
|---|---|---|---|---|---|
| 1 | 1 | NH$_4$+ exchanged and calcined | 6 | 1357 | 94 |
| 2 | 2 | Cat No. 1 steamed | 14 | 1006 | 70 |
| 3 | 3 | Cat No. 2 steamed | 33 | 154 | 76 |
| 4 | 4 | Cat No. 1 steamed | 49 | 58 | 83 |
| 5 | 5 | Cat No. 1 steamed | 100 | 32 | 90 |
| 6 | 6 | Cat No. 1 Na+ exchanged to equimolar ratio Na:Al2O3 | 100 | 1 | 69 |

Example 7

A sample of the fresh Ni-ZSM-5 catalyst used in Example 7 of EP-A-0 217 480 was evaluated for its DRI value. The catalyst, which had an alpha value of 100, was found to have a DRI of 24. The NOx conversion noted in the DRI test was 90%.

Example 8

A sample of the spent Ni-ZSM-5 catalyst used in Example 8 of EP-A-0 217 480 was evaluated for its DRI value. The catalyst had an alpha value of 62 and a DRI of 20. The NOx conversion noted in the DRI test was 70%.

Examples 1-8 show the dramatic increase in DRI produced by deactivation of the hydrogen form zeolite of Example 1 to reduce its activity for acid catalyzed reactions. In particular, Examples 1-6 show a variation of the DRI from a value of 6 for Example 1 to a value of 100 for Examples 5 and 6, which is a 17-fold variation from the fastest-responding catalyst to the slowest. At the same time, the six samples show a NOx conversion in the DRI test ranging from minimum to maximum values of 69% and 94%, which is about a 1.4 fold variation. There is no systematic variation of the NOx conversion level, but even if it were systematic and inversely correlated with the DRI, the DRI advantage as one progresses from Example 1 to 6 would far outweight the relatively small loss of catalytic activity which could be readily compensated, e.g. by a small reduction of space velocity. The results of Examples 7 and 8 are consistent with the above observations.

The decline in acid catalytic activity over the 1300-fold change in alpha value shows a negative correlation with the speed of response (DRI).

Very good results can be achieved with zeolites having a DRI above 25, more preferably having a DRI of 30-200, and most preferably having a DRI of 50-100 coupled with an alpha value of 1 to 60.

The above examples show that a $NO_x$ reduction process having rapid dynamic response to changes in $NO_x$

concentration is provided by a catalyst comprising a porous crystalline siliceous solid having a moderate to relatively low activity for acid catalyzed reactions, as measured by an alpha value in the range of 10 to 250, or 20 to 150, or 20 to 100. As indicated by Examples 1-8, such moderate acid activity could be achieved by steaming, by the addition of metallic cations to the zeolite, or by the use of an acidic crystalline solid which has become aged in use as an acidic organic conversion catalyst, or by combinations of such means or by synthesis means. Steam and the acquisition of metal contaminants either alone or in combination often is responsible for the deterioration in performance of a commercial organic or hydrocarbon conversion catalyst.

For purposes of the present invention, the term "aged" will be used to include a crystalline siliceous material the alpha value of which has been reduced in commercial use as an organic or hydrocarbon conversion catalyst (i.e. naturally aged), and such material that has been steamed, e.g. at 427° to 650°C (800° to 1200°F), and such material that has added metallic cations that reduce the alpha value, and materials for which the alpha value has been reduced by a combination of such means.

The preferred method for introducing metallic cations is conventional ion-exchange. Alkali and alkaline earth metal cations are highly effective for controlling the acid activity, the alkaline earth metal cations being preferred. Particularly preferred are calcium and magnesium.

Use of virgin catalyst with alkali or alkaline earth metals is preferred over used or naturally aged catalyst. The fresh zeolite will not have the uncertainties of unknown contaminents due to use in a refinery process.

The catalyst of the present invention is unusual in that the zeolite used will have little or no activity for conventional uses in hydrocarbon conversion. It is surprising that a catalyst which has almost no cracking activity, e.g., Catalyst No. 6 with equimolar amounts of Na and $Al_2O_3$ having an alpha value of 1, is still effective at converting $NO_x$.

## Claims

### Claims for the following Contracting States : BE, DE, FR, GB, IT, NL

1. A process for treating industrial exhaust gas contaminated with $NO_x$ at 200 to 600°C with ammonia over a porous crystalline siliceous material having a pore size of at least 5 A.U. (0.5nm) **characterized by** use of a crystalline material having a Dynamic Response Index (DRI) above 25, which Index has been determined by contacting the crystalline material with a gas containing 1 mol.% $NO_2$, 5 mol.% $NH_3$, and 0.75 mol.% $O_2$ in nitrogen at a temperature of 343°C and a gas hourly space velocity of 6000 hr$^{-1}$, which Index is adjusted with metallic cations selected from the group of alkali and alkaline earth metal cations and Nickel, the Index being calculated from the relation:

$$DRI = 100 \times (t_{ref}/t_c)$$

   wherein $t_{ref}$ is a reference time constant equal to 4 minutes, and $t_c$ is a time constant for the crystalline siliceous material equal to the time required after suspension of $NH_3$ addition for the $NO_2$ concentration at the reactor outlet to reach 63% of the final $NO_2$ concentration achieved after the $NH_3$ addition has been suspended.

2. The process of claim 1 further **characterized in that** the crystalline material has a silica to alumina ratio of at least 20 and a Constraint Index of 1 to 12.

3. The process of claim 2 further **characterized in that** the crystalline material has the structure of ZSM-5, ZSM-11, ZSM-12, ZSM-21, ZSM-23, ZSM-35, ZSM-38 or ZSM-48.

4. The process of claim 3 further **characterized in that** the material has the structure of ZSM-5.

5. The process of any preceding claim further **characterized in that** the DRI of the crystalline material is adjusted by steaming, by the incorporation of metallic cations, by use in an acid catalyzed reaction, or by combinations thereof.

### Claims for the following Contracting States : AT, CH, ES, GR, LI, SE

1. A process for treating industrial exhaust gas contaminated with $NO_x$ at 200 to 600°C with ammonia over a porous crystalline siliceous material having a pore size of at least 5 A.U. (0.5nm) **characterized by** use of a crystalline material having a Dynamic Response Index (DRI) above 25, which Index has been determined by contacting the crystalline material with a gas containing 1 mol.% $NO_2$, 5 mol.% $NH_3$, and 0.75 mol.% $O_2$ in nitrogen at a temperature of 343°C and a gas hourly space velocity of 6000 $hr^{-1}$, the Index being calculated from the relation:

$$DRI = 100 \times (t_{ref}/t_c)$$

wherein $t_{ref}$ is a reference time constant equal to 4 minutes, and $t_c$ is a time constant for the crystalline siliceous material.

2. The process of claim 1 further **characterized in that** the crystalline material has a silica to alumina ratio of at least 20 and a Constraint Index of 1 to 12.

3. The process of claim 2 further **characterized in that** the crystalline material has the structure of ZSM-5, ZSM-11, ZSM-12, ZSM-21, ZSM-23, ZSM-35, ZSM-38 or ZSM-48.

4. The process of claim 3 further **characterized in that** the material has the structure of ZSM-5.

5. The process of any preceding claim further **characterized in that** the DRI of the crystalline material is adjusted by steaming, by the incorporation of metallic cations, by use in an acid catalyzed reaction, or by combinations thereof.

**Patentansprüche**

**Patentansprüche für folgende Vertragsstaaten : BE, DE, FR, GB, IT, NL**

1. Verfahren zur Behandlung von industriellem Abgas, das mit $No_x$ verunreinigt ist, bei 200 bis 600°C mit Ammoniak über einem porösen kristallinen siliciumhaltigen Material mit einer Porengröße von mindestens 5 AU (0,5 nm), **gekennzeichnet durch** die Verwendung eines kristallinen Materials mit einem dynamischen Ansprechindex (DRI) über 25, wobei dieser Index bestimmt wurde, indem das kristalline Material bei einer Temperatur von 343°C und einer stündlichen Gas-Raum-Geschwindigkeit von 6000 $h^{-1}$ mit einem Gas in Kontakt gebracht wird, das 1 Mol-% $NO_2$, 5 Mol-% $NH_3$ und 0,75 Mol-% $O_2$ in Stickstoff enthält, wobei der Index mit Metallkationen eingestellt wird, die aus der Gruppe von Alkali- und Erdalkalimetallkationen und Nickel ausgewählt sind, wobei der Index aus der Gleichung

$$DRI = 100 \times (t_{ref}/t_c)$$

berechnet wurde,
worin $t_{ref}$ die Bezugszeitkonstante gleich 4 Minuten ist und $t_c$ die Zeitkonstante für das kristalline siliciumhaltige Material ist, die gleich der Zeit ist, die nach der Zugabe der Suspension von $NH_3$ notwendig ist, damit die $NO_2$-Konzentration am Reaktorauslaß 63 % der abschließenden $NO_2$-Konzentration erreicht, die nach der Einstellung der $NH_3$-Zugabe erzielt wurde.

2. Verfahren nach Anspruch 1, weiterhin **dadurch gekennzeichnet, daß** das kristalline Material ein Siliciumdioxid/Aluminiumoxid-Verhältnis von mindestens 20 und einen Zwangsindex von 1 bis 12 aufweist.

3. Verfahren nach Anspruch 2, weiterhin **dadurch gekennzeichnet, daß** das kristalline Material die Struktur von ZSM-5, ZSM-11, ZSM-12, ZSM-21, ZSM-23, ZSM-35, ZSM-38 oder ZSM-48 aufweist.

4. Verfahren nach Anspruch 3, weiterhin **dadurch gekennzeichnet, daß** das Material die Struktur von ZSM-5 hat.

5. Verfahren nach einem der vorstehenden Ansprüche, weiterhin **dadurch gekennzeichnet, daß** der DRI des kristallinen Materials durch Dampfbehandlung, durch Einarbeitung metallischer Kationen, durch Verwendung in einer säurekatalysierten Reaktion oder durch Kombinationen davon eingestellt wird.

**Patentansprüche für folgende Vertragsstaaten : AT, CH, ES, GR, LI, SE**

1. Verfahren zur Behandlung von industriellem Abgas, das mit $No_x$ verunreinigt ist, bei 200 bis 600°C mit Ammoniak über einem porösen kristallinen siliciumhaltigen Material mit einer Porengröße von mindestens 5 AU (0,5 nm), **gekennzeichnet durch** die Verwendung eines kristallinen Materials mit einem dynamischen Ansprechindex (DRI) über 25, wobei dieser Index bestimmt wurde, indem das kristalline Material bei einer Temperatur von 343°C und einer stündlichen Gas-Raum-Geschwindigkeit von 6000 $h^{-1}$ mit einem Gas in Kontakt gebracht wird, das 1 Mol-% $NO_2$, 5 Mol-% $NH_3$ und 0,75 Mol-% $O_2$ in Stickstoff enthält, wobei der Index aus der Gleichung

$$DRI = 100 \times (t_{ref}/t_c)$$

berechnet wurde,
worin $t_{ref}$ die Bezugszeitkonstante gleich 4 Minuten ist und $t_c$ die Zeitkonstante für das kristalline siliciumhaltige Material ist.

2. Verfahren nach Anspruch 1, weiterhin **dadurch gekennzeichnet , daß** das kristalline Material ein Siliciumdioxid/Aluminiumoxid-Verhältnis von mindestens 20 und einen Zwangsindex von 1 bis 12 aufweist.

3. Verfahren nach Anspruch 2, weiterhin **dadurch gekennzeichnet, daß** das kristalline Material die Struktur von ZSM-5, ZSM-11, ZSM-12, ZSM-21, ZSM-23, ZSM-35, ZSM-38 oder ZSM-48 aufweist.

4. Verfahren nach Anspruch 3, weiterhin **dadurch gekennzeichnet, daß** das Material die Struktur von ZSM-5 hat.

5. Verfahren nach einem der vorstehenden Ansprüche, weiterhin **dadurch gekennzeichnet, daß** der DRI des kristallinen Materials durch Dampfbehandlung, durch Einarbeitung metallischer Kationen, durch Verwendung in einer säurekatalysierten Reaktion oder durch Kombinationen davon eingestellt wird.

**Revendications**

**Revendications pour les Etats contractants suivants : BE, DE, FR, GB, IT, NL**

1. Un procédé de traitement de gaz d'échappement industriels contaminés par des NOx à 200 à 600°C à l'aide d'ammoniac sur un matériau siliceux cristallin poreux présentant des dimensions de pores d'au moins 5 AU (0,5 nm), **caractérisé par** l'utilisation d'un matériau cristallin présentant un indice de réponse dynamique (DRI) supérieur à 25. Cet indice ayant été déterminé par mise en contact du matériau cristallin avec un gaz contenant 1 % en moles de $NO_2$, 5 % en moles de $NH_3$ et 0,75 % en moles de $O_2$ dans l'azote à une température de 343°C et à une vitesse spatiale horaire de 6000 $h^{-1}$, cet indice étant ajusté par les cations métalliques choisis dans le groupe constitué par les cations de métaux alcalins et alcalino-terreux et le nickel, l'indice étant calculé par la relation :

$$DRI = 100 \text{ x } (t_{ref}/t_c)$$

dans laquelle :

$t_{ref}$    est un temps de référence constant; et
$t_c$    est un temps constant pour le matériau siliceux cristallin égal au temps nécessaire, après l'arrêt de l'addition de $NH_3$, pour que la concentration en $NO_2$ à la sortie du réacteur atteigne 63 % de la concentration finale en $NO_2$ obtenue après que l'addition de $NH_3$ a été arrêtée.

2. Le procédé selon la revendication 1, **caractérisé en outre en ce que** le matériau cristallin présente un rapport silice/alumine au moins égal à 20 et un indice de contrainte compris entre 1 et 12.

3. Le procédé selon la revendication 2, **caractérisé en ce que** le matériau cristallin présente la structure de la ZSM-5, la ZSM-11, la ZSM-12, la ZSM-21, la ZSM-23, la ZSM-35 la ZSM-38 ou la ZSM-48.

4. Le procédé selon la revendication 3, **caractérisé en outre en ce que** le matériau présente la structure de la ZSM-5.

5. Le procédé selon l'une quelconque des revendications précédentes, **caractérisé en ce que** le DRI du matériau cristallin est ajusté par traitement à la vapeur, par incorporation de cations métalliques, par utilisation dans une réaction catalysée par un acide, ou par des combinaisons de ces moyens.

**Revendications pour les Etats contractants suivants : AT, CH, ES, GR, LI, SE**

1. Un procédé de traitement de gaz d'échappement industriels contaminés par des NOx à 200 à 600°C à l'aide d'ammoniac sur un matériau siliceux cristallin poreux présentant des dimensions de pores d'au moins 5 AU (0,5 nm), **caractérisé par** l'utilisation d'un matériau cristallin présentant un indice de réponse dynamique (DRI) supérieur à 25, l'indice ayant été déterminé par mise en contact du matériau cristallin avec un gaz contenant 1 % en moles de $NO_2$, 5 % en moles de $NH_3$ et 0,75 % en moles de $O_2$ dans l'azote à une température de 343°C et à une vitesse spatiale horaire de 6000 $h^{-1}$, l'indice étant calculé par la relation :

$$DRI = 100 \times (t_{ref}/t_c)$$

dans laquelle :

$t_{ref}$ est un temps de référence constant égal à 4 minutes, et $t_c$ est un temps constant pour le matériau siliceux cristallin.

2. Le procédé selon la revendication 1, **caractérisé en outre en ce que** le matériau cristallin présente un rapport silice/alumine au moins égal à 20 et un indice de contrainte compris entre 1 et 12.

3. Le procédé selon la revendication 2, **caractérisé en ce que** le matériau cristallin présente la structure de la ZSM-5, la ZSM-11, la ZSM-12, la ZSM-21, la ZSM-23, la ZSM-35, la ZSM-38 ou la ZSM-48.

4. Le procédé selon la revendication 3, **caractérisé en outre en ce que** le matériau présente la structure de la ZSM-5.

5. Le procédé selon l'une quelconque des revendications précédentes, **caractérisé en ce que** le DRI du matériau cristallin est ajusté par traitement à la vapeur, par incorporation de cations métalliques, par utilisation dans une réaction catalysée par un acide, ou par des combinaisons de ces moyens.

NO$_2$ RECOVERY AFTER NH$_3$ SHUTOFF